## Europäisches Patentamt

## European Patent Office

## Office européen des brevets

(11) Veröffentlichungsnummer: **0 133 710**
**B1**

(12) **EUROPÄISCHE PATENTSCHRIFT**

(45) Veröffentlichungstag der Patentschrift:
**13.09.89**

(21) Anmeldenummer: **84109611.8**

(22) Anmeldetag: **13.08.84**

(51) Int. Cl.⁴: **A 01 B 29/04**

(54) Untergrundpacker.

(30) Priorität: **27.08.83 DE 3330997**

(43) Veröffentlichungstag der Anmeldung:
**06.03.85 Patentblatt 85/10**

(45) Bekanntmachung des Hinweises auf die Patenterteilung:
**13.09.89 Patentblatt 89/37**

(84) Benannte Vertragsstaaten:
**FR GB NL**

(56) Entgegenhaltungen:
**DE-C-121 268**
**DE-U-8 206 584**
**DE-U-8 230 833**
**FR-A-2 264 473**
**GB-A-1 070 778**
**GB-A-2 116 012**
**US-A-1 670 838**
**US-A-2 418 937**

(73) Patentinhaber: **H. Niemeyer Söhne GmbH & Co.
KG, Heinrich- Niemeyer- Strasse 52, D-4446
Hörstel- Riesenbeck (DE)**

(72) Erfinder: **Barlage, Bruno, Dipl.- Ing.,
Beethovenstrasse 13, D-4446 Hörstel (DE)**
Erfinder: **Werthmöller, Gregor, Heinrich- Niemeyer-
Strasse 4, D-4446 Hörstel (DE)**

(74) Vertreter: **Busse & Busse Patentanwälte, Postfach
1226 Grosshandelsring 6, D-4500 Osnabrück (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung betrifft einen Untergrundpacker in einer Ausbildung gemäß dem Oberbegriff des Anspruchs 1.

Bei aus der DE-U-8 230 833 bekannten Untergrundpackern dieser Art bildet der Innenringteil der Packerringe einen Nabenkörper mit einer Axialbohrung. Zur Abstützung und Lagerung der Packerringe findet eine durchgehende, mit ihren Enden in Lagern an den Längsstreben des Rahmens gelagerte Packerwelle Verwendung, die sich durch die Nabenkörper der auf sie aufgesetzten Packerringe hindurcherstreckt.

Bei einer derartigen Ausführung tritt ein erheblicher Verschleiß an der Packerwelle und an den diese umgebenden Nabenkörpern der Packerringe auf, oder es besteht ferner die Gefahr eines Festsetzens der Packerringe auf der Packerwelle, wodurch die Austauschbarkeit verschlissener Packerringe erheblich erschwert wird.

Es sind ferner aus der DE-U-8 206 584 bereits Untergrundpacker bekannt, bei denen die Packerringe im wesentlichen nur noch aus einem Außenringteil bestehen, der an seinem Innenumfang eine Anzahl von über den Umfang verteilten Verbindungsansätzen aufweist. Diese Verbindungsansätze weisen axiale Bohrungen auf, und zur gegenseitigen Verbindung benachbarter Packerringe findet eine der Anzahl der Verbindungsansätze entsprechende Anzahl von Distanzhülsen Verwendung, durch die sich langschäftige Spannschrauben hindurcherstrecken. Gruppen von drei oder mehr jeweils in dieser Weise achs- bzw. wellenfrei untereinander verbundenen Packerringen erhalten eine fliegende Lagerung und Abstützung mittels eines gesonderten Nabenkörpers, der über etwa radial gerichtete Streben mit den Befestigungsansätzen eines stirnseitig in der Gruppe angeordneten Packerrings verbindbar und auf das eine Ende einer Packerachse bzw. -welle aufsetzbar ist. Die Packerachse oder -welle ist an einer mittleren Längsstrebe des Rahmens abgestützt, trägt auf ihren beiden einander abgewandten freien Enden je eine Gruppe von untereinander verbundenen Packerringen und durchgreift dabei jeweils nur die Ebene der beiden auf ihr mittels eines Nabenkörpers gelagerten innenliegenden Packerringe der Packerringgruppe.

Bei einer derartigen Ausführung läßt die Verwindungssteifigkeit sowie die Festigkeit und Dauerhaftigkeit der Packerringverbindungen zu wünschen übrig, insbesondere aufgrund der Dehnbarkeit der langen Spannschrauben. Auch die Zentrierung der Packerringe und deren Aufrechterhaltung ist schwierig, da sie lediglich durch die Spannschrauben und die Bohrungen für diese herbeigeführt wird.

Der Erfindung liegt die Aufgabe zugrunde, einen Untergrundpacker der eingangs genannten Art zu schaffen, bei dem untereinander verbundene Packerringe eine besonders verwindungssteife Baugruppe bilden, einfach und präzise zusammensetzbar sind und eine hohe Verbindungsfestigkeit erhalten.

Zur Lösung dieser Aufgabe ist der Untergrundpacker nach der Erfindung gekennzeichnet durch die im kennzeichnenden Teil des Anspruchs 1 angegebenen Merkmale. Hinsichtlich wesentlicher weiterer Ausgestaltungen wird auf die Ansprüche 2 bis 8 verwiesen.

Zwei Ausführungsbeispiele des Gegenstands der Erfindung sind in der Zeichnung näher veranschaulicht. In der Zeichnung zeigen:

Fig. 1   eine schematische Seitenansicht einer ersten Ausführungsform eines Untergrundpackers nach der Erfindung,

Fig. 2   eine Teildraufsicht zu Fig. 1, teilweise im Schnitt,

Fig. 3   eine Seitenansicht ähnlich Fig. 1 einer zweiten Ausführungsform nach der Erfindung, und

Fig. 4   eine Draufsicht zu Fig. 3, bereichsweise im Schnitt.

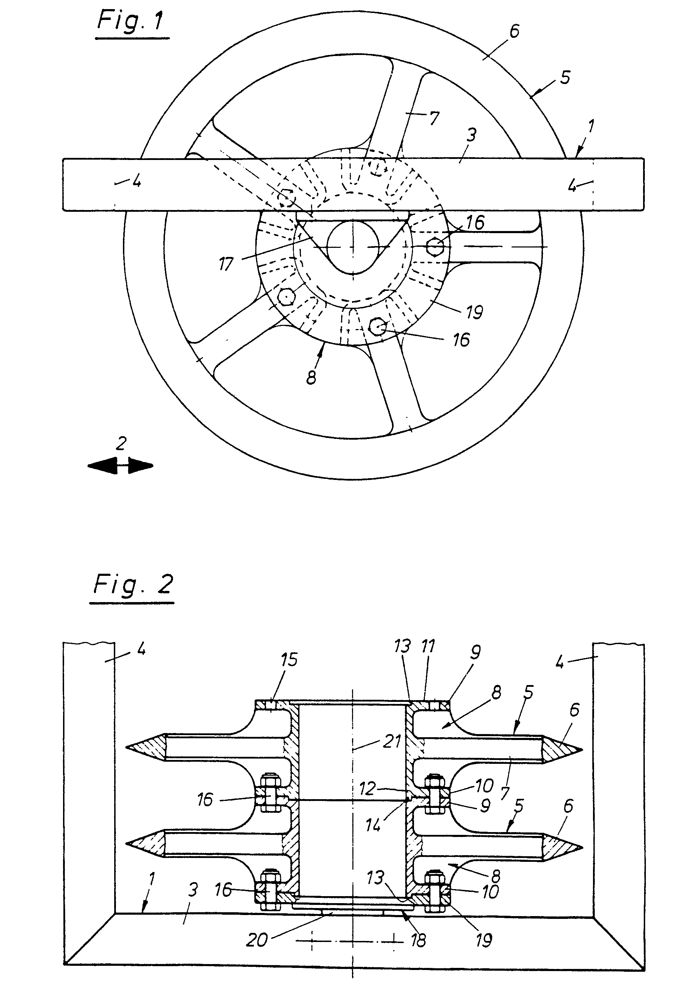

Der in Fig. 1 und 2 veranschaulichte Untergrundpacker besteht im einzelnen aus einem in geeigneter Weise an ein Zugfahrzeug anhängbaren Rahmen 1, der rechteckig ausgebildet ist und sich - bezogen auf die Betriebsbewegungsrichtungen 2 des Gerätes - aus außenliegenden Längsstreben 3 und Querstreben 4 zusammensetzt. Der Untergrundpacker umfaßt ferner eine Anzahl von im Abstand koaxial nebeneinander angeordneten Packerringen 5, die jeweils einen Außenringteil 6 und einen mit diesem über etwa radiale Speichen 7 vereinigten Innenringteil 8 umfassen. Die Teile 6, 7, 8 sind vorzugsweise einstückig aus Metall gegossen.

Die Innenringteile 8 der Packerringe 5 haben die Querschnittsform eines nach außen hin offenen U, und die Außenschenkel 9, 10 dieses Profils bilden Flanschringe mit radial gerichteten Flanschringflächen 11, 12. Im Bereich des Außenschenkels 9 ist der Innenringteil 8 jeweils mit einer Zentrierringnut 13 versehen, die vorteilhaft am Innenrand der Flanschringfläche 11 angeordnet ist. Der andere Außenschenkel 10 jeden Innenteils 8 ist mit einer passend gestalteten, axial vorstehenden, in die Zentrierringnut des Innenteils eines koaxial benachbarten Packerrings 5 eingreifenden Zentrierringschulter 14 versehen.

In den Außenschenkeln 9,10 der Innenringteile 8 sind axiale Bohrungen 15 vorgesehen, z. B. fünf, die regelmäßig über den Umfang verteilt angeordnet sind. In der Zusammenbaustellung der Packerringe gemäß Fig. 2 sind die einander zugewandten Außenschenkel 9, 10 der Innenringteile 8 benachbarter Packerringe 5 unmittelbar bündig aneinanderliegend durch axiale Schrauben 16 miteinander verbunden, welche die Bohrungen 15 durchgreifen. Diese axialen Schrauben 16 sind außerordentlich kurz, leicht berechenbar und können als Normteile ausgeführt sein.

Der gegenseitige axiale Abstand der Au- ßenringteile 6 der Packerringe 5 bestimmt sich bei der Ausführungsform nach Fig. 1 und 2 durch die axiale Breite der Innenringteile 8, d.h. den axialen Abstand der jeweiligen Flanschringflächen 11, 12 zueinander.

Eine Gruppe von z. B. sechs in vorbeschriebener Weise untereinander an ihren Innenringteilen 8 verbundenen Packerringen bildet eine Arbeitseinheit, die bevorzugt eine beidseitige Abstützung in Lagern 17 an beiden Längsstreben 3 des Rahmens 1 erfährt. Zur Abstützung in solchen fluchtend gegenüberliegenden Lagern 17 an den Längsstreben 3 des Rahmens 1 ist an jedem Ende der Gruppe von Packerringen 5 ein Anschlußteil 18 vorgesehen, von denen nur das eine veranschaulicht ist. Jedes der beiden Anschlußteile 18 umfaßt ein Trägerteil 19 mit einseitig an diesem festgelegtem Wellenstummel 20, der im zugehörigen Lager 17 Aufnahme findet. Das Trägerteil 19 bildet seinerseits einen Flanschring mit radialer Flanschringfläche, die ihrerseits mit einer Zentrierringnut 13 versehen ist. Der Trägerteil 19 ist bündig an der ihm zugewandten Flanschringfläche des Innenteils 8 des jeweils in der Gruppe außenliegenden Packerrings 5 anliegend durch über den Umfang verteilte axiale Schrauben 16 mit dem Innenringteil 8 vereinigbar, so daß eine mit beiden Anschlußteilen versehene Gruppe von Packerringen 5 eine komplette Arbeitseinheit bildet, die leicht in den Lagern 17 des Rahmens doppelseitig und um die Mittelachse 21 der Gruppe frei drehbar abgestützt werden kann.

Die an ihren Flanschflächen fest aneinander liegenden Innenringteile 8 vermitteln den Packerringen 5 einer Gruppe eine hohe Verwindungssteifigkeit im Betrieb, wobei durch die Zentrierringnuten und -schultern 13,14 eine auch im Dauerbetrieb verbleibende, leichte und genaue Zentrierung der Packerringe zueinander gewährleistet ist. Die relativ kurzen axialen Schrauben 16 unterliegen nur geringen für die Festigkeit der Verbindung unerheblichen Dehnungen, so daß eine Gruppe von Packerringen auch eine hohe Verbindungsfestigkeit darbietet.

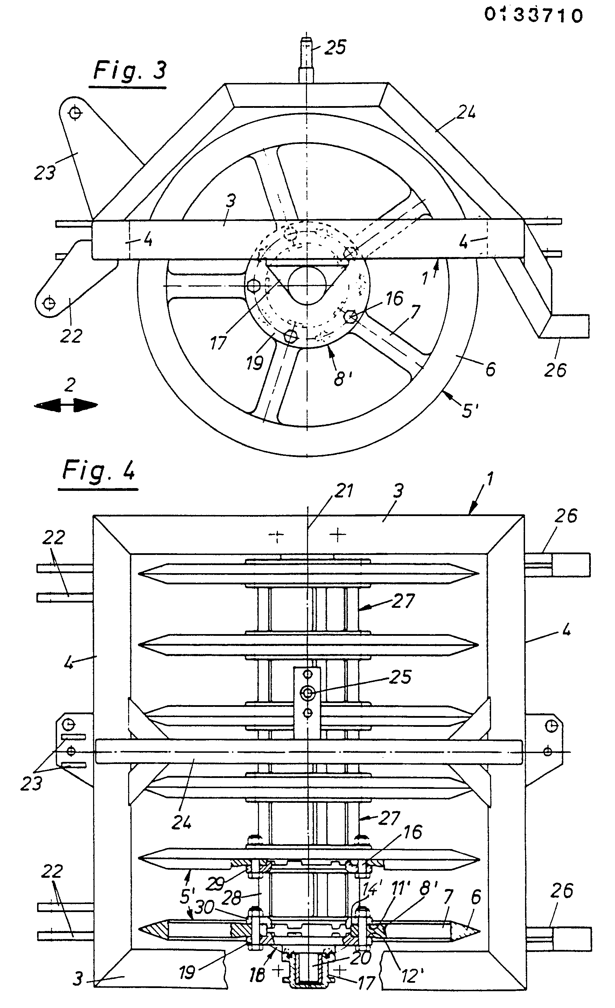

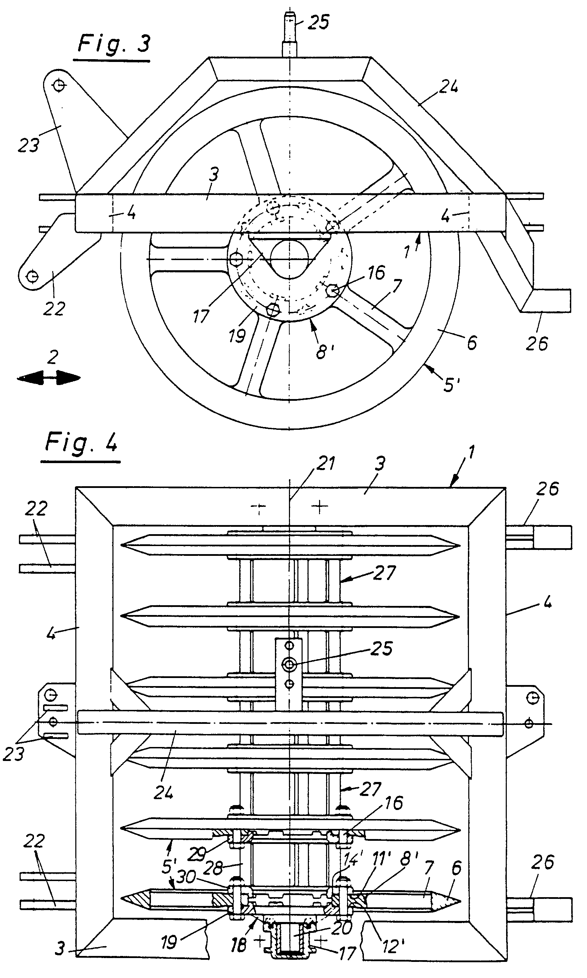

Die Ausführung gemäß Fig. 3 und 4 stimmt in zahlreichen Teilen mit der nach Fig. 1 und 2 überein, und die übereinstimmenden Teile tragen gleiche Bezugzeichen. Der Rahmen 1 ist wie dargestellt mit Anschlüssen 22, 23 für Unter- und Oberlenker der Dreipunkthydraulik eines landwirtschaftlichen Schleppers zwecks Anbau des Gerätes versehen, und er umfaßt eine obere Längstraverse 24 mit einem oberen Gelenkzapfen 25 für den Anschluß eines nachlaufenden Zusatzgerätes. Ferner umfaßt er Stützmittel 26 für einen Wegetransport des Zusatzgerätes. Die Packerringe 5' unterscheiden sich von den Packerringen 5 nach den Fig. 1 und 2 im wesentlichen durch eine andere Ausführung der Innenringteile 8', die einen etwa rechteckigen Vollquerschnitt mit radialen, zueinander parallelen Flanschringflächen 11', 12' aufweisen. Die Innenringteile 8' benachbarter Packerringe 5' sind jeweils über einen einstückigen Distanzringkörper 27 verbunden, und jeder Distanzringkörper 27 umfaßt zwei durch eine Anzahl, z. B. vier, axialer Distanzstege 28 verbundene koaxiale Flanschringe 29, 30, die an ihren äußeren radialen Flanschringflächen im Bereich des Innenrandes mit einer axial vorstehenden, in die kreisförmigen Mittelöffnungen der Innenringteile 8' benachbarter Packerringe 5' zentrierend eingreifenden Zentrierringschultern 14' versehen sind. In Zusammenbaustellung der Teile liegen die Flanschringflächen der Flanschringe 29, 30 des Distanzringkörpers 27 jeweils an den Flanschringflächen 11',12' benachbarter Packerringe 5' bündig an und sind in dieser Lage durch über den Umfang verteilte axiale Schrauben 16 festgelegt.

Auch die Distanzringkörper 27 können einteilig aus Metall gegossen sein. Sie bestimmen mit ihrer axialen Breite den Abstand der Packerringe 5' zueinander, und es besteht ohne weiteres die Möglichkeit, durch Wahl unterschiedlich breiter Packerringkörper 27 die Abstände zu variieren.

Auch bei dieser Ausführungsform finden wiederum zwei Anschlußteile 18 entsprechend denen bei der Ausführungsform nach Fig. 1 und 2 Anwendung.

In Fällen, in denen Gruppen von an ihren Innenringteilen 8 bzw. 8' verbundenen Packerringen 5 bzw. 5' fliegend am Rahmen abgestützt werden sollen, der in diesem Falle dann z. B. nur eine mittlere Längsstrebe umfaßt, können Anschlußteile vorgesehen werden, von denen jedes wiederum ein Trägerteil 19 und anstelle eines Wellenstummels eine mit diesem einseitig vereinigte Nabenhülse umfaßt. Diese ist auf einen Achs- oder Wellenzapfen aufsetzbar, der in einem Lager der mittleren Längsstrebe angebracht ist. Die Verbindung des Trägerteils 19 mit jenem Packerring 5 bzw. 5' einer fliegend gelagerten Gruppe erfolgt mittels axialer Schrauben 16 in der schon beschriebenen Weise.

Auch die Ausführungsform nach Fig. 3 und 4 erbringt für eine Gruppe untereinander verbundener Packerringe 5' eine hohe Verwindungssteifigkeit bei leichter und dauerhafter Zentrierung und hoher, auch bei Belastung gleichbleibender Festigkeit der Verbindung.

**Patentansprüche**

1. Untergrundpacker, bestehend aus einem an ein Zugfahrzeug anhäng- oder anbaubaren Rahmen (1), einer Anzahl von im Abstand koaxial nebeneinander angeordneten Packerringen (5; 5'), die einen Außen- (6) und einen mit diesem über etwa radiale Speichen (7) vereinigten Innenringteil (8; 8') aufweisen und drehbar abgestützt sind, dadurch gekennzeichnet, daß die Packerringe (5; 5') durch axiale Schrauben (16) einzeln untereinander lösbar verbunden sind, welche Schrauben (16) im Bereich der Innenringteile (8; 8') angeordnet sind und diese oder Bereiche (9; 10) derselben sowie Flanschringe (9, 10; 29, 30) durchgreifen, die an Flanschringflächen (11, 12; 11', 12') der Innenringteile (8; 8') bündig sowie zu diesen durch eine Zentrierringschulter (14; 14') formschlüssig zentriert anliegen.

2. Untergrundpacker nach Anspruch 1, dadurch gekennzeichnet, daß die Innenringteile (8) der Packerringe (5) die Querschnittsform eines nach außen hin offenen U mit Außenschenkeln (9, 10) aufweisen, welche die Flanschringe mit radial gerichteten Flanschringflächen (11, 12) bilden.

3. Untergrundpacker nach Anspruch 2, dadurch gekennzeichnet, daß die einander zugewandten Außenschenkel (9, 10) der Innenringteile (8) benachbarter Packerringe (5) unmittelbar bündig aneinanderliegend miteinander verbunden sind.

4. Untergrundpacker nach Anspruch 2 oder 3, dadurch gekennzeichnet, daß die Innenringteile (8) der Packerringe (5) im Bereich eines Außenschenkels (9) mit einer Zentrierringnut (13) und im Bereich ihres anderen Außenschenkels (10) mit der Zentrierringschulter (14) versehen sind, die axial in die Zentrierringnut (13) eines koaxial benachbarten Packerrings (5) eingreift.

5. Untergrundpacker nach Anspruch 1, dadurch gekennzeichnet, daß die Innenringteile (8') der Packerringe (5') einen etwa rechteckigen Vollquerschnitt mit radialen, zueinander parallelen Flanschringflächen (11', 12') aufweisen und benachbarte Packerringe (5') untereinander jeweils über einen axialen, einstückigen Distanzringkörper (27) verbunden sind, der zwei durch eine Anzahl axialer Distanzstege (28) verbundene koaxiale Flanschringe (29, 30) umfaßt, die mit ihren Flanschringflächen an den Flanschringflächen (11', 12') der Innenringteile (8') bündig anliegen.

6. Untergrundpacker nach Anspruch 5, dadurch gekennzeichnet, daß beide Flanschringe (29, 30) der Distanzringkörper (27) an ihrem Innenrand mit einer Zentrierringschulter (14') versehen sind, die axial vorstehen und in die Mittelöffnung des Innenringteils (8') benachbarter Packerringe (5') eingreifen.

7. Untergrundpacker nach einem oder mehreren der Ansprüche 1 bis 6, dadurch gekennzeichnet, daß zur beidseitigen Abstützung einer Gruppe von an ihren Innenringteilen (8; 8') untereinander verbundenen Packerringen (5; 5') in fluchtend gegenüberliegenden Lagern (17) an Längsstreben (3) des Rahmens (1) zwei Anschlußteile (18) vorgesehen sind, von denen jedes ein Trägerteil (19) mit einem einseitig an diesem festgelegten Wellenstummel (20) umfaßt, wobei das Trägerteil seinerseits einen radialen Flanschring mit einer Zentrierringnut (13) bildet, der bündig an der Flanschringfläche des Innenteils (8; 8') eines jeweils in der Gruppe außenliegenden Packerringes (5; 5') anliegend durch über den Umfang verteilte axiale Schrauben (16) mit dem Innenringteil verschraubbar ist.

8. Untergrundpacker nach einem oder mehreren der Ansprüche 1 bis 6, dadurch gekennzeichnet, daß zur einseitigen Abstützung eines Packerringes (5; 5') oder einer Gruppe von an ihren Innenringteilen (8; 8') untereinander verbundenen Packerringen auf einem an einer Längsstrebe des Rahmens (1) angebrachten Achsoder Wellenzapfen ein Anschlußteil vorgesehen ist, das ein Trägerteil (19) und eine Nabenhülse umfaßt, wobei das Trägerteil seinerseits einen radialen Flanschring mit einer Zentrierringnut (13) bildet, der bündig an der Flanschringfläche des Innenteils (8; 8') eines jeweils in der Gruppe außenliegenden Packerrings (5; 5') anliegend durch über den Umfang verteilte axiale Schrauben (16) mit dem Innenringteil verschraubbar ist.

## Claims

1. A land packer consisting of a frame (1) which can be coupled onto or mounted on a towing vehicle, of a plurality of packer rings (5; 5') which are disposed coaxially side by side with spacing apart and which comprise an outer ring portion (6) and an inner ring portion (8; 8') united therewith via substantially radial spokes (7) and are supported for rotation, characterised in that the packer rings (5; 5') are individually detachably connected to one another by axial bolts (16), which bolts (16) are disposed in the region of the inner ring portions (8, 8') and engage through these or regions (9, 10) thereof and through flange rings (9, 10; 29, 30) which lie flush against flange-ring faces (11, 12; 11', 12') of the inner ring portion (8, 8') being positively centred in relation thereto by an annular centring shoulder (14; 14').

2. A land packer according to claim 1, characterised in that the inner ring portions (8) of the packer rings (5) have the cross-sectional shape of an outwardly open U with outer arms (9, 10) which form the flange rings with radially directed flange-ring faces (11, 12).

3. A land packer according to claim 2, characterised in that the adjacent outer arms (9, 10) of the inner ring portions (8) of neighbouring packer rings (5) are connected to one another resting directly flush against one another.

4. A land packer according to claim 2 or 3, characterised in that the inner ring portions (8) of the packer rings (5) are provided, in the region of one outer arm (9), with an annular centring groove (13), and, in the region of their other outer arm (10), with the annular centring shoulder (14) which engages axially in the annular centring groove (13) of a coaxially adjacent packer ring (5).

5. A land packer according to claim 1, characterised in that the inner ring portions (8') of the packer rings (5') have a substantially rectangular solid cross-section with radial flange-ring faces (11', 12') parallel to one another, and adjacent packer rings (5') are each connected to one another through an axial, one-piece spacer-ring member (27) which comprises two coaxial flange rings (29, 30) connected by a plurality of axial spacer webs (28), which flange rings lie with their flange-ring faces flush against the flange-ring faces (11', 12') of the inner ring portions (8').

6. A land packer according to claim 5, characterised in that the two flange rings (29, 30) of the spacer ring members (27) are provided, at their inner edge with an annular centring shoulder (14'), which shoulders project axially and engage in the centre opening of the inner ring portion (8') of adjacent packer rings (5').

7. A land packer according to any one or more of claims 1 to 6, characterised in that, in order to support, at both sides, a group of packer rings (5; 5') connected to one another at their inner ring portions (8; 8'), two connecting members (18) are provided in bearings (17) situated opposite one another in alignment on longitudinal struts (3) of the frame (1), each of which connecting members comprises a supporting portion (19) with a stub shaft (20) located on this at one side, while the supporting portion in turn forms a radial flange ring with an annular centring groove (13), which flange ring, lying flush against the flange-ring face of the inner portion (8, 8') of a packer ring (5; 5') situated at the outside in the group, can be bolted to the inner ring portion by axial bolts (16) distributed over the circumference.

8. A land packer according to any one or more of claims 1 to 6, characterised in that, in order to support, at one side, a packer ring (5; 5') or a group of packer rings connected to one another at their inner ring portions (8; 8'), a connecting member is provided on an axle or shaft journal mounted on a longitudinal strut of the frame (1), which connecting member comprises a supporting portion (19) and a hub sleeve, while the supporting portion in turn forms a radial flange ring with an annular centring groove (13), which flange ring, lying flush against the flange-ring face of the inner portion (8; 8') of a packer ring (5; 5') situated at the outside in the group, can be bolted to the inner ring portion by axial bolts (16) distributed over the circumference.

**Revendications**

1. Rouleau de sous-sol compacteur, se composant d'un châssis (1) susceptible d'être attelé ou monté sur un véhicule tracteur, d'un certain nombre d'anneaux-compacteurs (5; 5') disposés coaxialement à distance, les uns à côté des autres, présentant une partie d'anneau extérieure (6) et une partie d'anneau intérieure (8; 8') réunie à celle-ci par l'intermédiaire de rayons (7) à peu près radiaux et supportés de manière tournante, caractérisé en ce que les anneaux-compacteurs (5; 5') sont individuellement reliés entre eux de manière démontable au moyen de vis axiales (16) qui sont disposées dans la zone des parties d'anneaux intérieures (8; 8') et traversant celles-ci ou des zones (9; 10) de celles-ci, ainsi que des anneaux de bride (9, 10; 29, 30) appuient de manière affleurée sur des faces d'anneaux de bride (11, 12; 11', 12') des parties d'anneaux intérieures (8; 8'), ainsi qu'en étant centrées par rapport à celles-ci par ajustement de forme, au moyen d'un épaulement annulaire de centrage (14; 14').

2. Rouleau de sous-sol selon la revendication 1, caractérisé en ce que les parties d'anneaux intérieures (8) des anneaux-compacteurs (5) présentent la forme de section transversale d'un U ouvert vers l'extérieur, avec des côtés extérieurs (9, 10) formant les anneaux de bride à faces d'anneau de bride (11, 12) orientées radialement.

3. Rouleau de sous-sol selon la revendication 2, caractérisé en ce que les côtés extérieurs (9, 10) tournés l'un vers l'autre des parties d'anneaux intérieures (8) d'anneaux-compacteurs voisins (5) sont directement reliés ensemble de manière affleurée, en appuyant les uns sur les autres.

4. Rouleau de sous-sol selon la revendication 2 ou 3, caractérisé en ce que les parties d'anneaux intérieures (8) des anneaux-compacteurs (5) sont pourvus, dans la zone d'un côté extérieur (9), d'une gorge annulaire de centrage (13) et, dans la zone de son autre côté extérieur (10), de l'épaulement annuaire de centrage (14) qui vient en prise axialement dans la gorge annulaire de centrage (13) d'un anneau-compacteur (5) coaxial voisin.

5. Rouleau de sous-sol selon la revendication 1, caractérisé en ce que les parties d'anneaux intérieures (8') des anneaux-compacteurs (5') présentent une section transversale pleine à peu près rectangulaire, avec des faces d'anneau de bride (11', 12') radiales, parallèles entre elles, et les anneaux-compacteurs (5') voisins étant reliés entre eux chaque fois par l'intermédiaire d'un corps de bague entretoise (27) d'une seule pièce, comprenant deux anneaux de bide (29, 30) coaxiaux reliés au moyen d'un certain nombre de nervures d'espacement (28) axiales et appuyant de manière affleurée avec leurs faces d'anneaux de bride sur les faces d'anneaux de bride (11', 12') des parties d'anneaux intérieures (8').

6. Rouleau de sous-sol selon la revendication 5, caractérisé en ce que les deux anneaux de bride (29, 30) des corps de bague entretoise (27) sont pourvus sur leur bord intérieur d'un épaulement annulaire de centrage (14'), en saillie axialement et venant en prise dans l'ouverture centrale de la partie d'anneau intérieure (8') d'anneaux-compacteurs (5') voisins.

7. Rouleau de sous-sol selon une ou plusieurs des revendications 1 à 6, caractérisé en ce qu'il est prévu deux parties de raccordement (18) pour supporter des deux côtés un groupe d'anneaux-compacteurs (5, 5') reliés entre eux à leurs parties d'anneaux intérieures (8; 8'), dans des paliers (17) faisant face de manière alignée et situés sur les montants longitudinaux (3) du châssis (1), parties (18) dont chacune comprend une partie de support (19) avec un tronçon d'arbre (20) fixé sur un côté de celle-ci, la partie de support formant de son côté un anneau de bride radial avec une gorge annulaire de centrage (13) qui est susceptible d'être vissée à la partie d'anneau intérieure au moyen de vis axiales (16) réparties à la périphérie, en appuyant de manière affleurée sur la face d'anneau de bride de la partie intérieure (8, 8') d'un anneau-compacteur (5, 5') chaque fois situé à l'extérieur dans le groupe.

8. Rouleau de sous-sol selon une ou plusieurs des revendications 1 à 6, caractérisé en ce qu'une partie de raccordement est prévue pour supporter sur un côté un anneau-compacteur (5, 5'), ou un groupe d'anneaux-compacteurs reliés entre eux à leurs parties d'anneaux intérieures (8, 8'), sur un tourillon d'axe ou d'arbre monté sur un montant longitudinal du châssis (1), partie (18) comprenant une partie de support (19) et une douille de moyeu, la partie de support formant de son côté un anneau de bride radial avec une gorge annulaire de centrage (13) qui est susceptible d'être vissée à la partie d'anneau intérieure au moyen de vis axiales (16) réparties à la périphérie, en appuyant de manière affleurée sur la face d'anneau de bride de la partie intérieure (8, 8') d'un anneau-compacteur (5, 5') chaque fois situé à l'extérieur dans le groupe.

Fig. 1

Fig. 2

0133710

## Fig. 3

## Fig. 4

Fig. 3

Fig. 4